# EUROPÄISCHE PATENTSCHRIFT

(11) **EP 2 459 891 B1**
(45) Veröffentlichungstag und Bekanntmachung des Hinweises auf die Patenterteilung: **18.05.2016**
(21) Anmeldenummer: 10737902.6
(22) Anmeldetag: 29.07.2010
(51) Int. Cl.: F16C 19/38, F16C 33/78, F16J 15/32

(54) **WÄLZLAGERANORDNUNG MIT EINEM RADIALWELLENDICHTRING**
ROLLING BEARING ASSEMBLY HAVING A RADIAL SHAFT SEAL
AGENCEMENT DE ROULEMENTS À ROULEAUX AVEC UNE BAGUE D'ÉTANCHÉITÉ RADIALE

(30) Priorität: 31.07.2009 EP 09009920
(43) Veröffentlichungstag der Anmeldung: 06.06.2012
(73) Patentinhaber: Aktiebolaget SKF, 415 50 Göteborg (SE)
(72) Erfinder: LIANG, Baozhu, 97456 Hambach (DE); PEUSCHEL, Thomas, 97453 Schonungen (DE); SCHWAPPACH, Alfred, 97494 Bundorf (DE); REUGELS, Michael, 97478 Knetzgau (DE)
(74) Vertreter: Schonecke, Mitja
(86) Internationale Anmeldenummer: PCT/EP2010/060999
(87) Internationale Veröffentlichungsnummer: WO 2011/012667

(56) Entgegenhaltungen:
- EP-A1- 2 404 071
- IT-A1- 506 248
- US-A- 4 692 040
- US-A- 5 441 452
- US-A- 5 711 616

## Beschreibung

Die Erfindung betrifft eine Wälzlageranordnung aufweisend wenigstens ein Wälzlager mit einem Außenring und einem Innenring und dazwischen angeordneten Wälzkörpern, sowie einen Radialwellendichtring mit einem Stützring und einer Dichtlippe.

In der US 4,692,040 A ist eine gattungsbildende Wälzlageranordnung offenbart, hierin ist in der Dichtungsanordnung ein Außenrandabschnitt eines Stützrings und ein am Stützring angebrachter Elastomer-Schichtabschnitt in einen Absatz einer inneren Mantelwand eines Außenrings eingesetzt.

Die EP 2 404 071 A1, welche den Stand der Technik nach Artikel 54(3) EPÜ bildet, beschreibt eine Dichtungsanordnung für ein Wälzlager mit mindestens einem Laufbahnring, wobei der Laufbahnring eine Laufbahn aufweist, die für ein Abwälzen von Wälzkörpern in einem Wälzkörperraum ausgebildet ist, mit einer Dichtungsscheibe, welche den Wälzkörperraum in einer axialen Richtung der Dichtungsanordnung abdichtet, mit einem Einstichbereich, welcher in dem Laufbahnring angeordnet ist und in dem die Dichtungsscheibe festgelegt ist, wobei sich die Dichtungsscheibe an einer Auflagefläche des Einstichbereichs abstützt, die Auflagefläche und die Laufbahn in radialer Richtung der Drehachse des Wälzlagers zumindest abschnittsweise überlappen, und wobei der Dichtungsring in dem Einstichbereich selbsthaltend und/oder selbstklemmend angeordnet ist.

Die DE 11 2006 002 478 T5 beschreibt ein Wälzlager, umfassend Spurringe, enthaltend einen Innenring und einen Außenring, eine Vielzahl von Walzkörpern, die zwischen dem Innenring und dem Außenring angeordnet sind, und Dichtelemente zum Abdichten beider Enden des Lagers. Eine Isolationsschicht ist an einer Innendurchmesseroberfläche und einer Endfläche des Innenrings oder an einer Außendurchmesserfläche und einer Endfläche des Außenrings bereitgestellt und das Dichtelement ist aus einem Harzmaterial gebildet und weist im Querschnitt eine Kanalform auf, die von beiden Endflächen des Innenrings und des Außenrings vorsteht.

Aufgabe der Erfindung ist es, eine Wälzlageranordnung mit einer verbesserten Lebensdauer zu schaffen.

Die Aufgabe der Erfindung wird gelöst durch eine Wälzlageranordnung aufweisend wenigstens ein Wälzlager mit einem Außenring und einem Innenring und dazwischen angeordneten Wälzkörpern, sowie einen Radialwellendichtring mit einem Stützring und einer Dichtlippe, wobei wenigstens eine Stirnseite des Außenrings eine Aufnahme zum Halten des Stützrings aufweist, der sich, insbesondere axial über die Stirnseite des Außenrings hinweg nach außen überstehend, bis an eine Außenumfangsfläche des Innenrings heran erstreckt, an der die mit dem Stützring verbundene Dichtlippe axial innenseitig der Stirnseite des Außenrings die Außenumfangsfläche des Innenrings berührend anliegt, und die Aufnahme eine in die Stirnseite des Außenrings eingebracht Ringnut aufweist, in der ein Außenrandabschnitt des Stützrings und/oder ein am Stützring angebrachter Elastomer-Schichtabschnitt eingreift, und der Stützring sich axial über die Stirnseite des Außenrings hinweg nach außen überstehend, bis an eine Außenumfangsfläche des Innenrings heran erstreckt.

Indem wenigstens eine Stirnseite des Außenrings eine Aufnahme zum Halten des Stützrings aufweist, ist im Bereich der Innenlaufbahn des Außenrings kein freier Bauraum erforderlich, um den Radialwellendichtring in diesem Bereich an dem Wälzlager befestigen zu können. Da im Bereich der Innenlaufbahn des Außenrings kein freier Bauraum für die Halterung des Radialwellendichtring erforderlich ist, kann die gesamte Breite der Innenlaufbahn des Außenrings als tragende Fläche für die Wälzkörper dienen. Eine erfindungsgemäße Wälzlageranordnung kann dabei die selbe Traglast aufweisen, wie ein gleich dimensioniertes Wälzlager ohne Dichtung. Indem die Traglast gegenüber einer Bauart ohne Dichtung nicht reduziert ist, bleibt die Lebensdauer trotz angefügter Dichtung erhalten, bzw. die Lebensdauer ist gegenüber einer bekannten verkürzter Bauart mit integrierter Dichtung erhöht.

Indem der Stützring sich bis an eine Außenumfangsfläche des Innenrings heran erstreckt, an der die mit dem Stützring verbundene Dichtlippe axial innenseitig der Stirnseite des Außenrings die Außenumfangsfläche des Innenrings berührend anliegt, kann der Innenring gleich schmal, wie ein vergleichbares Wälzlager ohne Dichtung ausgebildet sein, d.h. der Innenring muss nicht breiter als der Außenring ausgebildet werden, vielmehr kann der Innenring die gleiche Breite aufweisen, wie der Außenring, oder der Innenring kann gegebenenfalls sogar eine geringere Breite aufweisen als der Außenring.

Nachdem der Stützring axial über die Stirnseite des Außenrings hinweg nach außen übersteht, kann beispielsweise ein Wälzlagerkäfig sich in den durch den Überstand des Stützrings gebildeten Hohlraum hinein erstrecken.

Der Stützring kann aus Metall, insbesondere aus Tiefziehbandstahl hergestellt sein und eine Kreisringoberfläche aufweisen, die unmittelbar an der Stirnseite des Außenrings anliegt. Ein Stützring aus Metall oder Tiefziehbandstahl kann dem Radialwellendichtring eine hohe Steifigkeit verleihen. Indem eine Kreisringoberfläche des Stützrings unmittelbar an der Stirnseite des Außenrings anliegt, kann eine positions- und lagegenaue Montage des Radialwellendichtrings bezüglich dem Wälzlager, insbesondere bezüglich des Innenrings auf dem die Dichtlippe läuft, erfolgen. Die Aufnahme weist eine in die Stirnseite des Außenrings eingebrachte Ringnut auf, in der ein Außenrandabschnitt des Stützrings und/oder ein am Stützring angebrachter Elastomer-Schichtabschnitt eingreift. Ergänzend zur Ringnut kann die Aufnahme einen an der Stirnseite des Außenrings eingebrachten Radialabsatz aufweisen, an dem ein Außenrandabschnitt des Stützrings und/oder ein am Stützring angebrachter Elastomer-Schichtabschnitt angreift. Durch eine in die Stirnseite des Außenrings eingebrachte Ringnut kann der Radialwellendichtring formschlüssig an dem Außenring gehalten werden.

Der Außenring kann eine Eindrehung aufweisen, in die ein korrespondierender Ringvorsprung des Elastomer-Schichtabschnitts formschlüssig eingreift. Die Eindrehung kann insbesondere eine keilförmige Eindrehung sein. Der Ringvorsprung kann insbesondere ein keilförmiger Ringvorsprung sein. Durch die Verbindung von Eindrehung und Ringvorsprung wird eine formschlüssige Verbindung geschaffen, die ein unbeabsichtigtes Lösen des Radialwellendichtrings von dem Außenring verhindern kann.

Die Aufnahme kann eine in die Stirnseite des Außenrings eingebracht Ringnut mit einer axialen Vertiefung aufweisen, in die ein sich in axialer Richtung erstreckender Außenrandabschnitt des Stützrings eingreift. Durch das Ineinandergreifen von axial erstreckendem Außenrandabschnitt des Stützrings und axialer Vertiefung kann eine exakte koaxiale Halterung des Radialwellendichtrings bezüglich des Innenrings des Wälzlagers erreicht werden.

Der umlaufende Außenrandabschnitt des Stützrings kann an seiner nach innen weisenden Mantelfläche und/oder an seiner axialen Stirnfläche und/oder an seiner nach außen weisenden Mantelfläche mit einem Elastomer-Schichtabschnitt versehen sein, der zusammen mit dem Außenrandabschnitt in die Ringnut eingreift. Dadurch kann der Außenrandabschnitt des Stützrings elastisch und isolierend in der Aufnahme des Außenrings gehalten werden.

In allen Ausgestaltungen kann der Stützring einen ringförmig in einem Abstand zur Außenumfangsfläche des Innenrings umlaufenden Innenrandabschnitt aufweisen, an dem die Dichtlippe angebracht ist. Der ringförmig in einem Abstand zur Außenumfangsfläche des Innenrings umlaufenden Innenrandabschnitt stellt dabei eine steife und positions- sowie lagerichtige Anordnung der Dichtlippe sicher. Insbesondere kann damit die Dichtlippe in einer genauen, koaxialen Position gehalten werden.

Die Dichtlippe kann axial außerhalb des Innenrandabschnitts des Stützrings an der Außenumfangsfläche des Innenrings anliegend angeordnet sein. Mit anderen Worten erstreckt sich der Innenrandabschnitt des Stützrings bis nahe an die Wälzkörper des Wälzlagers heran, wobei die Dichtlippe an einer von den Wälzkörpern abgewandten Seite des Innenrandabschnitt angeordnet ist, d.h. die Dichtlippe befindet sich an einer Außenseite des Stützrings.

In allen Ausgestaltungen kann die Dichtlippe mit einer Zugfeder versehen sein. Die Zugfeder kann dabei insbesondere von oben d.h. radial außen durch einen Abschnitt des Stützrings überdeckt sein.

Der Stützring kann in allen Ausführungsformen einen sich axial erstreckenden Außenrandabschnitt, einen sich radial erstreckenden Innenrandabschnitt und einen ringwannenförmigen Mittenabschnitt aufweisen. Der ringwannenförmige Mittenabschnitt kann dabei insbesondere axial über die Stirnseite des Außenrings hinweg nach außen überstehen.

Ein Wälzlagerkäfig kann sich dabei bis in den ringwannenförmigen Mittenabschnitt des Stützrings erstrecken.

In allen Ausführungsformen kann das wenigstens eine Wälzlager ein Kegelrollenlager, insbesondere ein vierreihiges Kegelrollenlager sein. Der Innenrandabschnitt des Stützrings kann sich dabei bis unter die äußeren Stirnseiten der Kegelrollen des Kegelrollenlagers erstrecken.

In allen Ausführungsformen kann der Außenrandabschnitt des Stützrings von einem an der Stirnseite des Außenrings anliegenden Maschinenbauteil an dem Außenring formschlüssig gehalten sein. Das Maschinenbauteil kann ein Gehäusedeckel, insbesondere ein Gehäusedeckel einer Walzwerkslagerung, wie einer Arbeitswalzenlagerung sein. Der Stützring kann insbesondere in einer Ringnut des Außenrings formschlüssig gehalten sein.

Zusammenfassend stellt die Erfindung mit anderen Worten ein neues Dichtungsdesign für insbesondere Kegelrollenlager, beispielsweise vierreihige Kegelrollenlager bereit. Dieses neue Dichtungsdesign kann insbesondere in einer Walzwerkslagerung, wie einer Arbeitswalzenlagerung Anwendung finden. Die Erfindung kann insbesondere für Lagerungen in Walzgerüsten, speziell Arbeitswalzenlagerungen, eingesetzt werden, da die gängigen vierreihigen Kegelrollenlager aufgrund der Umgebungsbedingungen ständig dem Kühlwasser sowie dem Zunder des Stahlverarbeitungsprozesses ausgesetzt sind. Vierreihige Kegelrollenlager stehen in offener und abgedichteter Ausführung zur Verfügung. Die Dichtungen der abgedichteten Variante sollen das Eindringen von Wasser und Schmutz ins Lagerinnere verhindern und dadurch eine längere Lebensdauer gewährleisten.

Ein Nachteil der bekannten abgedichteten vierreihigen Kegelrollenlager stellt die geringere Tragfähigkeit im Vergleich zur offenen Ausführung dar. Da die Dichtungen einen bestimmten Raum im Lager in Anspruch nehmen, müssen die Wälzkörper jeder Reihe kürzer ausgeführt werden, was zu der verringerten Tragfähigkeit des Lagers führt. Diese Reduzierung der Tragfähigkeit soll durch das neue Dichtungsdesign vermieden werden, insbesondere indem der Raum den die Dichtung innerhalb des Lagers in Anspruch nimmt minimiert wird.

Die erfindungsgemäße Dichtung kann so konzipiert sein, dass sie an ein leicht modifiziertes offenes vierreihiges Kegelrollenlager angebracht werden kann, insbesondere auch im Rahmen einer Nachrüstung von bestehenden Lagerungen Somit ist eine eigene Ausführungsvariante eines abgedichteten vierreihigen Kegelrollenlagers nicht mehr nötig.

Die Dichtung selbst kann analog der in vierreihigen Kegelrollenlagern bekannten Ausführungsarten von Dichtungen ausgebildet sein. Als Materialien können beispielsweise Tiefziehbandstahl, sowie Fluor-Kautschuk zum Einsatz kommen. Bekannte Dichtungen sind so gestaltet, dass sie die Außenabmessungen des Lagers nicht übersteigen sollen, d. h. die Breite entspricht der Gesamtbreite des Lagers und die Dichtungen nehmen nur innerhalb des Lagers Bauraum in Anspruch.

Die Form der Dichtung kann derart sein, dass diese an ein offenes vierreihiges Kegelrollenlager angebracht werden kann, wobei die Außenabmessungen des Lagers mit Dichtung die Lagerbreite ohne Dichtung in axialer Richtung um ein Breitenmaß übersteigt. Aufgrund dieser Formgebung ist es möglich ein ursprünglich offenes vierreihiges Kegelrollenlager abzudichten und die volle Tragfähigkeit des offenen Lagers beizubehalten, da der Einsatz von kürzeren Rollen nicht mehr notwendig ist. Grundsätzlich ist es zudem möglich, die Innenkonstruktion des Lagers so zu ändern, dass auch eine Mittendichtung zwischen den beiden Innenringen eingesetzt werden kann. In den Stirnseiten der äußeren Außenringe kann dazu eine Nut sowie ein Absatz eingedreht sein, die der Aufnahme der Dichtung dienen. Ein Einlegeblech der Dichtung kann aus Tiefziehbandstahl hergestellt sein und einen Absatz aufweisen, der im Innendurchmesser etwas kleiner ist als der Durchmesser, der in den Außenring eingedrehten Nut. Somit besteht zwischen dem Einlegeblech und der Nut eine Art Presssitz, der ein ungewolltes Lösen der Dichtung verhindern kann.

Eine Fluor-Kautschuk-Beschichtung kann die Dichtwirkung am äußeren Durchmesser der Dichtung sicherstellen. Die Fluor-Kautschuk-Beschichtung kann in die Nut mit eingepresst werden. Der Außendurchmesser des Innenrings dient als Dichtfläche für die an das Einlegeblech angebrachte Fluor-Kautschuk-Dichtlippe. Für einen ausreichend hohen Anpressdruck der Dichtlippe kann eine Zugfeder sorgen. Bei Arbeitswalzenlagerungen ist in der Regel ein Freiraum vorhanden, in dem der axiale Überstand der Dichtung hineinragen kann, ohne das dies zu einer Beeinträchtigung im Betrieb führt.

Ein weiterer Vorteil des erfindungsgemäßen Dichtungsdesigns ist, dass die Dichtungen im Einbauzustand durch einen Gehäusedeckel, welche die Außenringe axial klemmen kann, zusätzlich gehalten werden und so ein ungewolltes Lösen der Dichtungen vom Lager während des Betriebs verhindert ist.

In einer alternativen Ausgestaltung bezüglich der Anbindung der Dichtung an den Außenring sowie bezüglich des Dichtlippendesigns kann der Außenring eine keilförmige Eindrehung aufweisen. Die Dichtung kann dabei einen Elastomerüberzug, der im Bereich der Anbindung ebenfalls als Keil ausgeformt ist, aufweisen. Bei Montage der Dichtung schnappt der Elastomerkeil in die keilförmige Eindrehung des Außenrings und hält somit die Dichtung im Lager. Diese Schnapplösung kann lediglich dazu vorgesehen sein, die Dichtung allein während der Lagermontage im Lager halten, wobei während des Betriebs die Außenringe durch die Gehäusedeckel verspannt sind und somit ein Lösen der Dichtung durch die anliegenden Gehäusedeckel verhindert ist.

Die Dichtlippe kann außerdem mit einer vergrößerten Dichtlippenlänge ausgebildet sein. Ein im Gehäusedeckel zur Verfügung stehenden Raum kann genutzt werden, um den axialen Überstand der Dichtung aufzunehmen.

Zwei Ausführungsbeispiele der Erfindung sind exemplarisch in den beigefügten schematischen Zeichnungen dargestellt. Es zeigen:
- Fig. 1: eine Halbschnittsansicht einer ersten Ausführung einer erfindungsgemäßen Wälzlageranordnung,
- Fig. 2: eine vergrößerte Teilschnittsansicht der ersten Ausführung gemäß Fig. 1,
- Fig. 3: eine Halbschnittsansicht einer zweiten Ausführung einer erfindungsgemäßen Wälzlageranordnung, und
- Fig. 4: eine vergrößerte Teilschnittsansicht der zweiten Ausführung gemäß Fig. 3.

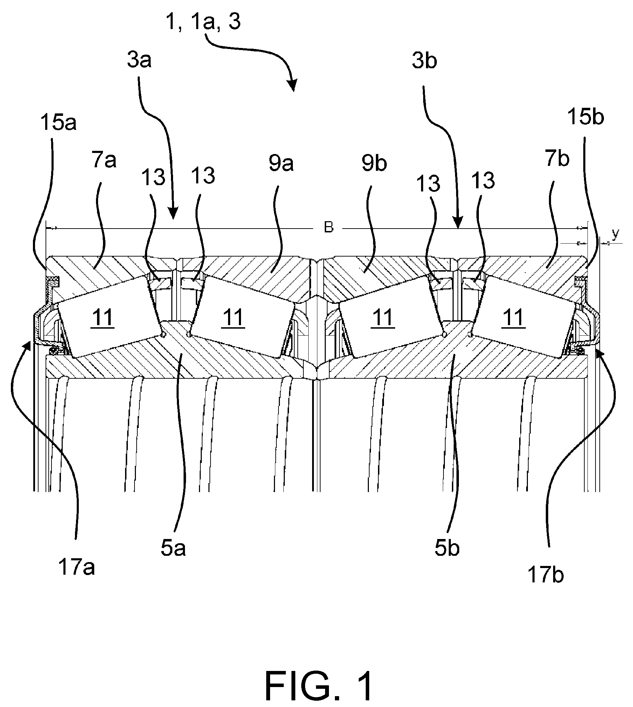

In der Fig. 1 ist die erste Ausführung einer erfindungsgemäßen Wälzlageranordnung 1 im Halbschnitt dargestellt. Die Wälzlageranordnung 1 ist am Beispiel eines Wälzlagers 1a in Art eines abgedichteten vierreihigen Kegelrollenlagers 3 erläutert. Das vierreihige Kegelrollenlager 3 weist zwei axial nebeneinander angeordnete zweireihige Kegelrollenlager 3a und 3b auf. Jedes der zweireihigen Kegelrollenlager 3a und 3b weist einen einzelnen Innenring 5a, 5b und zwei Außenringe 7a, 9a und 7b, 9b auf. Entlang jeder Außenringlaufbahn jeden Außenrings 7a, 9a und 7b, 9b und den Innenringlaufbahnen der Innenring 5a, 5b sind Wälzkörper 11 angeordnet. Die Wälzkörper 11 jeden einzelnen Kegelrollenlagers 3 sind mittels eines Wälzlagerkäfigs 13 in gleich bleibenden Abständen zueinander geführt. An einer ersten Stirnseite 15a des einen zweireihigen Kegelrollenlager 3a und an einer zweiten Stirnseite 15b des anderen zweireihigen Kegelrollenlager 3b ist jeweils ein Radialwellendichtring 17a, 17b angeordnet.

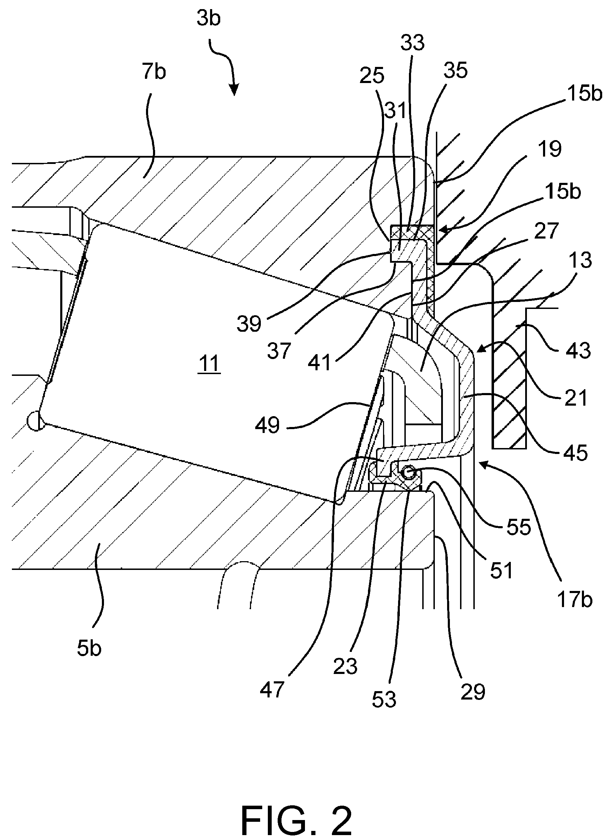

In Fig. 2 ist der Radialwellendichtring 17b gemäß der ersten Ausführung zusammen mit einem Ausschnitt des Kegelrollenlagers 3b in einer vergrößerten Darstellung gezeigt. Die Stirnseite 15b des Außenrings 7b weist eine Aufnahme 19 zum Halten eines Stützrings 21 des Radialwellendichtrings 17b auf. Der Stützring 21 ist Teil des Radialwellendichtrings 17b und trägt eine Dichtlippe 23.

Die Aufnahme 19 ist in die Stirnseite 15b des Außenrings 7b eingebracht. Die Aufnahme 19 wird im dargestellten Ausführungsbeispiel von einer Ringnut 25 und einem Radialabsatz 27 gebildet. Zur Bildung von Ringnut 25 und Radialabsatz 27 kann in die Stirnseite 15b beispielsweise eine Stufe eingebracht bzw. eingedreht werden, so dass eine radial innen liegende Flächenhälfte der Stirnseite 15b axial zurückversetzt wird. In Bereich der so gebildeten Stufe kann ergänzend, wie im Ausführungsbeispiel verwirklicht, eine über die radial innen liegende Flächenhälfte der Stirnseite 15b axial weiter zurückversetzte Ringnut 25 eingebracht bzw. eingedreht werden. Die Ringnut 25 kann sich dabei insoweit im Bereich der Stufe befinden. Im Ergebnis ergibt sich mit anderen Worten eine L-förmige Aussparung an der Stirnseite 15b des Außenrings 7b. Gegenüber einer standardisierten Baugröße des Wälzlagers 1a bzw. des Kegelrollenlager 3b springt dabei die radial außen liegende Flächenhälfte der Stirnseite 15b nicht axial von der Stirnseite des Wälzlagers 1a bzw. des Kegelrollenlager 3b vor, sondern die radial innen liegende Flächenhälfte der Stirnseite 15b ist gegenüber der standardisierten Baugröße axial zurückversetzt d.h. die radial innen liegende Flächenhälfte der Stirnseite 15b liegt axial tiefer im Wälzlagers 1a bzw. im Kegelrollenlager 3b als eine Stirnseite 29 des Innenrings 5b.

Im dargestellten Ausführungsbeispiel greift ein Außenrandabschnitt 31 des Stützrings 21 und ein am Stützring 21 angebrachter, bevorzugt vulkanisierter Elastomer-Schichtabschnitt 33 in die Aufnahme 19, bzw. in die Ringnut 25 ein bzw. an dem Radialabsatz 27 an. Der umlaufende Außenrandabschnitt 31 des Stützrings 21 ist, wie dargestellt, an seiner nach außen weisenden Mantelfläche 35 mit einem Elastomer-Schichtabschnitt versehen. Alternativ oder ergänzend kann der umlaufende Außenrandabschnitt 31 an seiner nach innen weisenden Mantelfläche 37 und/oder an seiner axialen Stirnfläche 39 mit einem Elastomer-Schichtabschnitt versehen sein. Der Elastomer-Schichtabschnitt 33 greift zusammen mit dem Außenrandabschnitt 31 in die Ringnut 25 ein.

Der Stützring 21 ist vorzugsweise aus Metall, insbesondere aus Tiefziehbandstahl hergestellt. Der Stützring 21 weist im dargestellten Ausführungsbeispiel eine Kreisringoberfläche 41 auf, die unmittelbar an der Stirnseite 15b d.h. gemäß der Ausführungsform nach Fig. 2 an der radial innen liegende Flächenhälfte der Stirnseite 15b des Außenrings 7b anliegt. Der Außenrandabschnitt 31 des Stützrings 21 ist dabei von einem an der Stirnseite 15b des Außenrings 7b anliegenden Maschinenbauteil, insbesondere einem Gehäusedeckel 43, an dem Außenring 7b d.h. in der Ringnut 25 formschlüssig gehalten.

An den sich axial erstreckenden Außenrandabschnitt 31 des Stützrings 21 schließt sich die Kreisringoberfläche 41 an, welche in einen ringwannenförmigen Mittenabschnitt 45 übergeht, an den sich wiederum ein ringförmig umlaufender Innenrandabschnitt 47 anschließt. Der ringwannenförmigen Mittenabschnitt 45 steht im Ausführungsbeispiel axial über die Stirnseite 15b des Außenrings 7b hinweg nach außen über. Dabei kann sich der Wälzlagerkäfig 13 bis in den ringwannenförmigen Mittenabschnitt 45 des Stützrings 21 erstrecken. Gleichzeitig kann sich der Innenrandabschnitt 47 des Stützrings 21 bis unter die äußeren Stirnseiten 49 der Kegelrollen 11 erstrecken.

In einem Abstand zu einer Außenumfangsfläche 51 des Innenrings 5b endet der Innenrandabschnitt 47. An dem Ende des ringförmig umlaufenden Innenrandabschnitts 47 des Stützrings 21 ist die Dichtlippe 23 angebracht. Die Dichtlippe 23 weist eine Dichtkante 53 auf, die dichtend an der Außenumfangsfläche 51 des Innenrings 5b anliegt. Die Dichtlippe 23 ist mit einer Zugfeder 55 versehen.

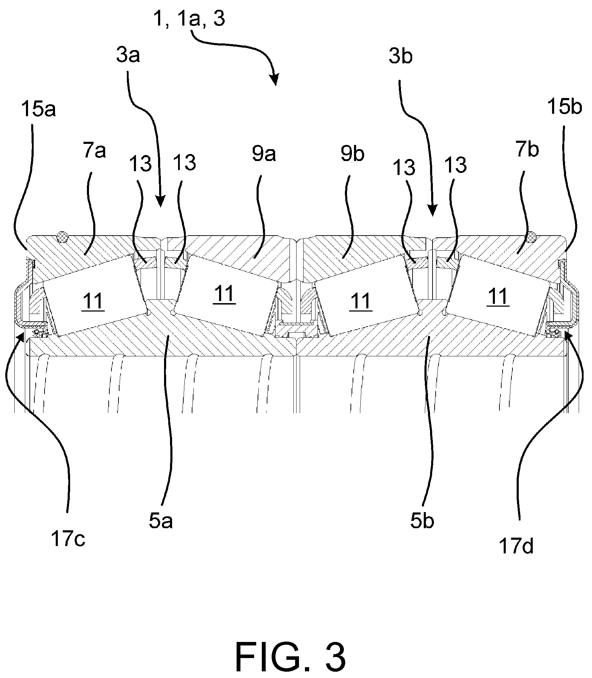

In der Fig. 3 ist die zweite Ausführung einer erfindungsgemäßen Wälzlageranordnung 1 im Halbschnitt dargestellt. Die Wälzlageranordnung 1 ist wie in Fig. 1 am Beispiel des Wälzlagers 1a in Art des abgedichteten vierreihigen Kegelrollenlagers 3 erläutert. Das vierreihige Kegelrollenlager 3 weist zwei axial nebeneinander angeordnete zweireihige Kegelrollenlager 3a und 3b auf. Jedes der zweireihigen Kegelrollenlager 3a und 3b weist einen einzelnen Innenring 5a, 5b und zwei Außenringe 7a, 9a und 7b, 9b auf. Entlang jeder Außenringlaufbahn jeden Außenrings 7a, 9a und 7b, 9b und den Innenringlaufbahnen der Innenring 5a, 5b sind die Wälzkörper 11 angeordnet. Die Wälzkörper 11 jeden einzelnen Kegelrollenlagers 3 sind mittels der Wälzlagerkäfige 13 in gleich bleibenden Abständen zueinander geführt. An der ersten Stirnseite 15a des einen zweireihigen Kegelrollenlager 3a und an der zweiten Stirnseite 15b des anderen zweireihigen Kegelrollenlager 3b ist jeweils der Radialwellendichtring 17c, 17d gemäß der zweiten Ausführung angeordnet.

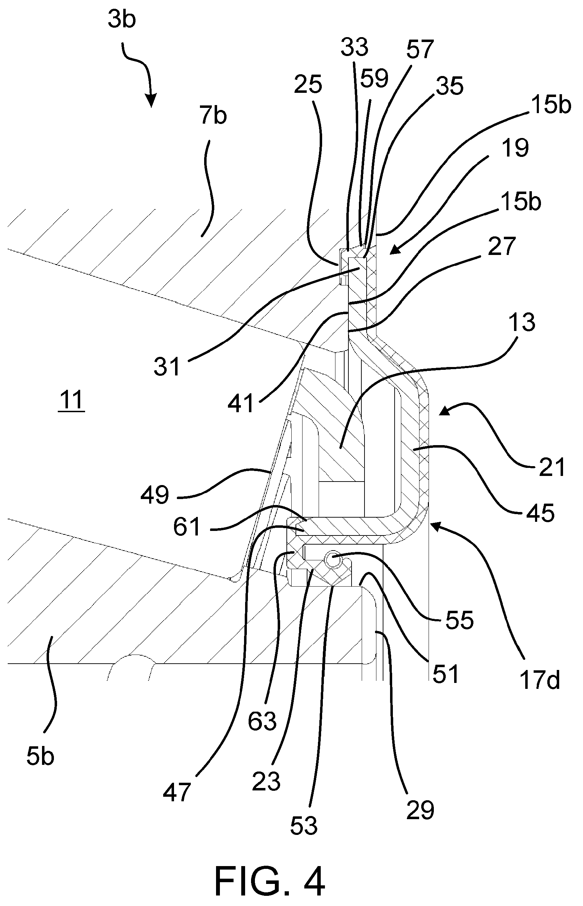

In Fig. 4 ist der Radialwellendichtring 17b gemäß der zweiten Ausführung zusammen mit einem Ausschnitt des Kegelrollenlagers 3b in einer vergrößerten Darstellung gezeigt. Gegenüber der ersten Ausführung gemäß Fig. 2 weist die zweite Ausführung gemäß Fig. 4 die im Folgenden beschriebenen Änderungen auf.

Der Außenrandabschnitt 31 des Stützrings 21 erstreckt sich in der zweiten Ausführung nicht in einer axialen Richtung sondern in einer radialen Richtung. Dabei umfasst der bevorzugt vulkanisierte Elastomer-Schichtabschnitt 33 den Außenrandabschnitt 31 von drei Seiten. Die Ringnut 25 weist eine zusätzliche keilförmige Eindrehung 57 auf. In die zusätzliche keilförmige Eindrehung 57 greift ein keilförmiger Ringvorsprung 59 der Elastomer-Schichtabschnitt 33 ein. Der Stützring 21 weist den Elastomer-Schichtabschnitt 33 nicht nur im Bereich des Außenrandabschnitts 31 und im Bereich des Innenrandabschnitts 47 auf, sondern der Elastomer-Schichtabschnitt 33 erstreckt sich über die gesamte Außenseite des Stützrings 21. Der Innenrandabschnitt 47 ist in der zweiten Ausführung nicht in eine radiale Richtung umgebogen, sondern erstreckt sich lediglich axial. Der Innenrandabschnitt 47 kann dabei mit einer Fase 61 versehen sein. Am Innenrandabschnitt 47 bzw. an der Fase 61 ist die Dichtlippe 23 mit einem sich radial erstreckenden Zwischenabschnitt 63 angeformt. Die Dichtlippe 23 ist in der zweiten Ausführung mit dem Elastomer-Schichtabschnitt 33 verbunden bzw. an diesen Elastomer-Schichtabschnitt 33 angeformt.

### Bezugszeichenliste

- 1: Wälzlageranordnung
- 3: vierreihiges Kegelrollenlager
- 3a, 3b: zweireihiges Kegelrollenlager
- 5a, 5b: Innenring
- 7a, 7b: Außenringe
- 9a, 9b: Außenringe
- 11: Wälzkörper
- 13: Wälzlagerkäfig
- 15a: erste Stirnseite
- 15b: zweite Stirnseite
- 17a, 17b: Radialwellendichtring
- 19: Aufnahme
- 21: Stützring
- 23: Dichtlippe
- 25: Ringnut
- 27: Radialabsatz
- 29: Stirnseite
- 31: Außenrandabschnitt
- 33: Elastomer-Schichtabschnitt
- 35: nach außen weisende Mantelfläche
- 37: nach innen weisende Mantelfläche
- 39: axiale Stirnfläche
- 41: Kreisringoberfläche
- 43: Gehäusedeckel
- 45: Mittenabschnitt
- 47: Innenrandabschnitt
- 49: äußere Stirnseite
- 51: Außenumfangsfläche
- 53: Dichtkante
- 55: Zugfeder
- 57: keilförmige Eindrehung
- 59: keilförmiger Ringvorsprung
- 61: Fase
- 63: Zwischenabschnitt

## Patentansprüche

1. Wälzlageranordnung aufweisend wenigstens ein Wälzlager (1a) mit einem Außenring (7a, 7b, 9a, 9b) und einem Innenring (5a, 5b) und dazwischen angeordneten Wälzkörpern (11), sowie einen Radialwellendichtring (17a, 17b, 17c, 17d) mit einem Stützring (21) und einer Dichtlippe (23), wobei wenigstens eine Stirnseite (15a, 15b) des Außenrings (7a, 7b) eine Aufnahme (19) zum Halten des Stützrings (21) aufweist, der sich bis an eine Außenumfangsfläche (51) des Innenrings (5a, 5b) heran erstreckt, an der die mit dem Stützring (21) verbundene Dichtlippe (23) axial innenseitig der Stirnseite (15a, 15b) des Außenrings (7a, 7b) die Außenumfangsfläche (51) des Innenrings (5a, 5b) berührend anliegt, **dadurch gekennzeichnet, dass** die Aufnahme (19) eine in die Stirnseite (15a, 15b) des Außenrings (7a, 7b) eingebracht Ringnut (25) aufweist, in der ein Außenrandabschnitt (31) des Stützrings (21) und/oder ein am Stützring (21) angebrachter Elastomer-Schichtabschnitt (33) eingreift, und der Stützring (21) sich axial über die Stirnseite (15a, 15b) des Außenrings (7a, 7b) hinweg nach außen überstehend, bis an eine Außenumfangsfläche (51) des Innenrings (5a, 5b) heran erstreckt.

2. Wälzlageranordnung nach Anspruch 1, **dadurch gekennzeichnet, dass** der Stützring (21) aus Metall, insbesondere aus Tiefziehbandstahl hergestellt ist und eine Kreisringoberfläche (41) aufweist, die unmittelbar an der Stirnseite (15a, 15b) des Außenrings (7a, 7b) anliegt.

3. Wälzlageranordnung nach Anspruch 1 oder 2, **dadurch gekennzeichnet, dass** der Außenring (7a, 7b) eine radiale Eindrehung (57) aufweist, in die ein korrespondierender, insbesondere radialer Ringvorsprung (59) des Elastomer-Schichtabschnitts (33) formschlüssig eingreift.

4. Wälzlageranordnung nach einem der Ansprüche 1 bis 3, **dadurch gekennzeichnet, dass** die Aufnahme (19) eine in die Stirnseite (15a, 15b) des Außenrings (7a, 7b) eingebracht Ringnut (25) mit einer axialen Vertiefung aufweist, in die ein sich in axialer Richtung erstreckender Außenrandabschnitt (31) des Stützrings (21) eingreift.

5. Wälzlageranordnung nach Anspruch 4, **dadurch gekennzeichnet, dass** der umlaufende Außenrandabschnitt (31) des Stützrings (21) an seiner nach innen weisenden Mantelfläche (37) und/oder an seiner axialen Stirnfläche (39) und/oder an seiner nach außen weisenden Mantelfläche (35) mit einem Elastomer-Schichtabschnitt (33) versehen ist, der zusammen mit dem Außenrandabschnitt (31) in die Ringnut (25) eingreift.

6. Wälzlageranordnung nach einem der Ansprüche 1 bis 5, **dadurch gekennzeichnet, dass** der Stützring (21) einen ringförmig in einem Abstand zur Außenumfangsfläche (51) des Innenrings (5a, 5b) umlaufenden Innenrandabschnitt (47) aufweist, an dem die Dichtlippe (23) angebracht ist.

7. Wälzlageranordnung nach Anspruch 6, **dadurch gekennzeichnet, dass** die Dichtlippe (23) axial außerhalb des Innenrandabschnitts (47) des Stützrings (21) an der Außenumfangsfläche (51) des Innenrings (5a, 5b) anliegt.

8. Wälzlageranordnung nach Anspruch 7, **dadurch gekennzeichnet, dass** die Dichtlippe (23) mit einer Zugfeder (55) versehen ist.

9. Wälzlageranordnung nach einem der Ansprüche 1 bis 8, **dadurch gekennzeichnet, dass** der Stützring (21) einen sich axial erstreckenden Außenrandabschnitt (31), einen sich radial erstreckenden Innenrandabschnitt (47) und einen ringwannenförmigen Mittenabschnitt (45) aufweist, der insbesondere axial über die Stirnseite (15a, 15b) des Außenrings (7a, 7b) hinweg nach außen übersteht.

10. Wälzlageranordnung nach Anspruch 9, **dadurch gekennzeichnet, dass** ein Wälzlagerkäfig (13) sich bis in den ringwannenförmigen Mittenabschnitt (45) des Stützrings (21) erstreckt.

11. Wälzlageranordnung nach einem der Ansprüche 1 bis 10, **dadurch gekennzeichnet, dass** das wenigstens eine Wälzlager (1a) ein Kegelrollenlager (3), insbesondere ein vierreihiges Kegelrollenlager (3) ist.

12. Wälzlageranordnung nach Anspruch 11, **dadurch gekennzeichnet, dass** der Innenrandabschnitt (47) des Stützrings (21) sich bis unter die äußeren Stirnseiten (49) der Kegelrollen (11) erstreckt.

13. Wälzlageranordnung nach einem der Ansprüche 1 bis 12, **dadurch gekennzeichnet, dass** der Außenrandabschnitt (31) des Stützrings (21) von einem an der Stirnseite (15a, 15b) des Außenrings (7a, 7b) anliegenden Maschinenbauteil, insbesondere einem Gehäusedeckel (43), an dem Außenring (7a, 7b), insbesondere in der Ringnut (25) formschlüssig gehalten ist.

## Claims

1. Anti-friction bearing arrangement having at least one anti-friction bearing (1a) with an outer ring (7a, 7b, 9a, 9b) and an inner ring (5a, 5b) and rolling bodies (11) which are arranged in between, and a radial shaft sealing ring (17a, 17b, 17c, 17d) with a supporting ring (21) and a sealing lip (23), at least one end side (15a, 15b) of the outer ring (7a, 7b) having a receptacle (19) for holding the supporting ring (21) which extends as far as an outer circumferential face (51) of the inner ring (5a, 5b), against which outer circumferential face (51) the sealing lip (23) which is connected to the supporting ring (21) bears, in contact with the outer circumferential face (51) of the inner ring (5a, 5b), axially on the inner side of the end side (15a, 15b) of the outer ring (7a, 7b), **characterized in that** the receptacle (19) has an annular groove (25) which is made in the end side (15a, 15b) of the outer ring (7a, 7b) and in which an outer edge section (31) of the supporting ring (21) and/or an elastomer layer section (33) which is attached to the supporting ring (21) engage/engages, and the supporting ring (21), projecting to the outside axially over the end side (15a, 15b) of the outer ring (7a, 7b), reaches as far as an outer circumferential face (51) of the inner ring (5a, 5b).

2. Anti-friction bearing arrangement according to Claim 1, **characterized in that** the supporting ring (21) is manufactured from metal, in particular from deep-drawn strip steel, and has a circularly annular surface (41) which bears directly against the end side (15a, 15b) of the outer ring (7a, 7b).

3. Anti-friction bearing arrangement according to Claim 1 or 2, **characterized in that** the outer ring (7a, 7b) has a turned groove (57), into which a corresponding, in particular radial annular projection (59) of the elastomer layer section (33) engages in a positively locking manner.

4. Anti-friction bearing arrangement according to one of Claims 1 to 3, **characterized in that** the receptacle (19) has an annular groove (25) which is made in the end side (15a, 15b) of the outer ring (7a, 7b) and has an axial depression, into which an outer edge section (31), extending in the axial direction, of the supporting ring (21) engages.

5. Anti-friction bearing arrangement according to Claim 4, **characterized in that** the circumferential outer edge section (31) of the supporting ring (21) is provided with an elastomer layer section (33) on its inwardly pointing circumferential face (37) and/or on its axial end face (39) and/or on its outwardly pointing circumferential face (35), which elastomer layer section (33) engages together with the outer edge section (31) into the annular groove (25).

6. Anti-friction bearing arrangement according to one of Claims 1 to 5, **characterized in that** the supporting ring (21) has an inner edge section (47) which runs around at a spacing from the outer circumferential face (51) of the inner ring (5a, 5b) and on which the sealing lip (23) is attached.

7. Anti-friction bearing arrangement according to Claim 6, **characterized in that** the sealing lip (23) bears against the outer circumferential face (51) of the inner ring (5a, 5b) axially outside the inner edge section (47) of the supporting ring (21).

8. Anti-friction bearing arrangement according to Claim 7, **characterized in that** the sealing lip (23) is provided with a tension spring (55).

9. Anti-friction bearing arrangement according to one of Claims 1 to 8, **characterized in that** the supporting ring (21) has an axially extending outer edge section (31), a radially extending inner edge section (47), and an annularly trough-shaped centre section (45) which projects, in particular, axially beyond the end side (15a, 15b) of the outer ring (7a, 7b) towards the outside.

10. Anti-friction bearing arrangement according to Claim 9, **characterized in that** an anti-friction bearing cage (13) extends as far as the annularly trough-shaped centre section (45) of the supporting ring (21).

11. Anti-friction bearing arrangement according to one of Claims 1 to 10, **characterized in that** the at least one anti-friction bearing (1a) is a tapered roller bearing (3), in particular a four-row tapered roller bearing (3).

12. Anti-friction bearing arrangement according to Claim 11, **characterized in that** the inner edge section (47) of the supporting ring (21) extends as far as below the outer end sides (49) of the tapered rollers (11).

13. Anti-friction bearing arrangement according to one of Claims 1 to 12, **characterized in that** the outer edge section (31) of the supporting ring (21) is held in a positively locking manner on the outer ring (7a, 7b), in particular in the annular groove (25), by a machine component, in particular a housing cover (43), which bears against the end side (15a, 15b) of the outer ring (7a, 7b).

## Revendications

1. Agencement de palier à roulement présentant au moins un palier à roulement (1a) avec une bague extérieure (7a, 7b, 9a, 9b) et une bague intérieure (5a, 5b) et des corps de roulement (11) disposés entre elles, ainsi qu'une bague d'étanchéité radiale d'arbre (17a, 17b, 17c, 17d) avec une bague de support (21) et une lèvre d'étanchéité (23), au moins un côté frontal (15a, 15b) de la bague extérieure (7a, 7b) présentant un logement (19) pour retenir la bague de support (21) qui s'étend jusqu'à une surface périphérique extérieure (51) de la bague intérieure (5a, 5b), au niveau de laquelle la lèvre d'étanchéité (23) connectée à la bague de support (21) s'applique axialement du côté intérieur du côté frontal (15a, 15b) de la bague extérieure (7a, 7b) en venant en contact avec la surface périphérique extérieure (51) de la bague intérieure (5a, 5b), **caractérisé en ce que** le logement (19) présente une rainure annulaire (25) pratiquée dans le côté frontal (15a, 15b) de la bague extérieure (7a, 7b), dans laquelle s'engage une portion de bord extérieur (31) de la bague de support (21) et/ou une portion de couche en élastomère (33) appliquée sur la bague de support (21) et la bague de support (21) s'étend en saillie axialement au-delà du côté frontal (15a, 15b) de la bague extérieure (7a, 7b) vers l'extérieur jusque contre une surface périphérique extérieure (51) de la bague intérieure (5a, 5b).

2. Agencement de palier à roulement selon la revendication 1, **caractérisé en ce que** la bague de support (21) est fabriquée en métal, en particulier à partir d'un feuillard d'acier embouti profond et présente une surface annulaire circulaire (41) qui s'applique directement contre le côté frontal (15a, 15b) de la bague extérieure (7a, 7b).

3. Agencement de palier à roulement selon la revendication 1 ou 2, **caractérisé en ce que** la bague extérieure (7a, 7b) présente une gorge radiale tournée dans la masse (57) dans laquelle s'engage par engagement par correspondance de formes une saillie annulaire (59) correspondante, notamment radiale, de la portion de couche en élastomère (33).

4. Agencement de palier à roulement selon l'une quelconque des revendications 1 à 3, **caractérisé en ce que** le logement (19) présente une rainure annulaire (25) pratiquée dans le côté frontal (15a, 15b) de la bague extérieure (7a, 7b) avec un renfoncement axial dans lequel s'engage une portion de bord extérieure (31) de la bague de support (21) s'étendant dans la direction axiale.

5. Agencement de palier à roulement selon la revendication 4, **caractérisé en ce que** la portion de bord extérieure périphérique (31) de la bague de support (21) est pourvue au niveau de sa surface d'enveloppe tournée vers l'intérieur (37) et/ou au niveau de sa surface frontale axiale (39) et/ou au niveau de sa surface d'enveloppe tournée vers l'extérieur (35), d'une portion de couche en élastomère (33) qui, conjointement avec la portion de bord extérieure (31), vient en prise dans la rainure annulaire (25).

6. Agencement de palier à roulement selon l'une quelconque des revendications 1 à 5, **caractérisé en ce que** la bague de support (21) présente une portion de bord intérieure (47) s'étendant sur la périphérie sous forme annulaire à distance de la surface périphérique extérieure (51) de la bague intérieure (5a, 5b), contre laquelle est appliquée la lèvre d'étanchéité (23).

7. Agencement de palier à roulement selon la revendication 6, **caractérisé en ce que** la lèvre d'étanchéité (23) s'applique axialement à l'extérieur de la portion de bord intérieure (47) de la bague de support (21) contre la surface périphérique extérieure (51) de la bague intérieure (5a, 5b).

8. Agencement de palier à roulement selon la revendication 7, **caractérisé en ce que** la lèvre d'étanchéité (23) est pourvue d'un ressort de traction (55).

9. Agencement de palier à roulement selon l'une quelconque des revendications 1 à 8, **caractérisé en ce que** la bague de support (21) présente une portion de bord extérieure (31) s'étendant axialement, une portion de bord intérieure (47) s'étendant radialement et une portion centrale (45) en forme de cuvette annulaire, qui fait saillie notamment axialement vers l'extérieur au-delà du côté frontal (15a, 15b) de la bague extérieure (7a, 7b).

10. Agencement de palier à roulement selon la revendication 9, **caractérisé en ce qu'**une cage de palier à roulement (13) s'étend jusque dans la portion centrale (45) en forme de cuvette annulaire de la bague de support (21).

11. Agencement de palier à roulement selon l'une quelconque des revendications 1 à 10, **caractérisé en ce que** l'au moins un palier à roulement (la) est un palier à rouleaux coniques (3), en particulier un palier à rouleaux coniques à quatre rangées (3).

12. Agencement de palier à roulement selon la revendication 11, **caractérisé en ce que** la portion de bord intérieure (47) de la bague de support (21) s'étend jusqu'en dessous des côtés frontaux extérieurs (49) des rouleaux coniques (11).

13. Agencement de palier à roulement selon l'une quelconque des revendications 1 à 12, **caractérisé en ce que** la portion de bord extérieure (31) de la bague de support (21) est retenue par engagement par correspondance de formes contre la bague extérieure (7a, 7b), en particulier dans la rainure annulaire (25), par un composant de machine s'appliquant contre le côté frontal (15a, 15b) de la bague extérieure (7a, 7b), en particulier un couvercle de boîtier (43).
